# EUROPEAN PATENT SPECIFICATION

(11) **EP 2 217 843 B1**
(45) Date of publication and mention of the grant of the patent: **21.09.2011**
(21) Application number: 07858970.2
(22) Date of filing: 28.11.2007
(51) Int. Cl.: F16L 37/092

(54) **Tube coupling system**
Rohrkupplungssystem
Système de raccord de tuyauterie

(43) Date of publication of application: 18.08.2010
(73) Proprietor: Kongsberg Automotive AS, 3601 Kongsberg (NO)
(72) Inventor: SANGRO, Jan-Erik, N-2319 Hamar (NO); DALE, Kristoffer, N-2608 Lillehammer (NO); MONSEN, Alf, Greve, N-2830 Raufoss (NO)
(74) Representative: Ahme, Johannes
(86) International application number: PCT/IB2007/003792
(87) International publication number: WO 2009/068932

(56) References cited:
- EP-A1- 1 296 089
- WO-A1-03/021143
- WO-A1-2006/037962
- JP-A- 2004 232 746
- US-A- 4 946 200
- US-A- 5 921 588

## Description

The present invention relates to a tube coupling system comprising a coupling body for receiving a tube, a sealing means between the outer surface of the tube and the inner surface of the coupling body, a gripping means for gripping the outer surface of the tube received in the coupling body, and a tube support body onto which the tube fits.

In many applications tubes must be connected with each other or with other components in such a way that leakage is prevented and unintentional release of the tube is precluded. This is particularly important in systems where malfunction and failure of the tube coupling can be hazardous and lead to serious damages, for instance in a braking system of a vehicle. A typical tube connector for such a purpose can be found in WO 2006/112726 A1.

The most common failure in form of leakage and unintentional release is due to an incorrect assembly when the tube is connected to a coupling system. The case that the tube is not fully inserted into a coupling system is an example of such an incorrect assembly. Especially when the insertion force is high due to tight gripping or sealing means that are used in high-pressure systems the engagement of the tube with a final stop portion may not be evident to a user during manual assembly.

Therefore, some feedback is needed indicating the assembler when the tube is fully and correctly inserted in a coupling system.

It is known to provide visual markings on the outer surface of the tube giving the assembler a visual indication on when the tube is fully inserted. This can for example be a line that needs to hide in the coupling body when the tube is fully inserted into the coupling system. However, this solution is disadvantageous as the tube cannot be shortened to an appropriate length without losing the visual markings at one or both ends. Furthermore, there is an uncertainty about the positioning of the marking and the ability to judge whether the visual markings indicate full insertion or not.

Other common solutions provide the user with a recognisable push-in feeling that indicates when the tube is in correct position. This requires that the user is able to make a distinction in the feeling which is for example difficult when using a tool for assembly. Moreover, a recognisable push-in feeling is a highly subjective measure which various users might experience differently.

A coupling system according to the preamble of claim 1 is known from WO 2006/037962 which describes a further solution by providing an audible indication of the fully-inserted position of the tube. The coupling system disclosed therein comprises a tube support member on which a tube is slid onto. During insertion of the tube into the coupling the tube pushes the tube support member which is therefore urged to slide deeper into the coupling body. A groove and tongue configuration between the outer surface of the tube support member and the inner surface of the coupling body provides an audible click signal notifying the user that the tube with the tube support member has reached a fully-inserted position.

The solution described in WO 2006/037962 has the disadvantage that the audible click signal only notifies the user that tube support member has reached a fully-inserted relative position rather than the tube being fully inserted into the coupling. So, there is no information given whether the tube is really fully inserted in the tube support member. The risk of leakage and unintentional release due to an incorrect assembly of the tube into the tube support member therefore remains. Furthermore, the push-in force during insertion of the tube is significantly increased by the resistance that the groove and tongue configuration poses to produce an audible click signal. This resistance must be relatively large, because a premature click signal before the tube has reached a final stop portion of the tube support member would be detrimental. This resistance force adds up to the friction caused by gripping or sealing means yielding an uncomfortably high total push-in force. Such a required high total push-in force in turn can easily lead to a high frictional force between the tube and the tube support member when the tube is applied in a slightly tilted way, for example. If this frictional force exceeds the click resistance, a detrimental premature click signal is triggered before the tube is fully inserted into the tube support member.

The object of the present invention is to overcome the disadvantages of the prior art and to provide a tube coupling system that really assures an assembler of the tube being fully inserted into the coupling.

This object is solved by the subject-matter of claim 1. According to the present invention a tube coupling system is provided comprising a coupling body for receiving a tube, a sealing means between the outer surface of the tube and the inner surface of the coupling body, a gripping means for gripping the outer surface of the tube received in the coupling body, and a tube support body onto which the tube fits, characterised in that said tube support body comprises a feedback element that provides an audible feedback signal when the tube is inserted onto the tube support body and reaches fully ins serted position relative to the tube support body, wherein the feedback element is a member moulded to the tube support body in form of a tongue that protrudes at least partially into the void that is intended to receive the tube.

The tube support body is preferably secured within the coupling body or can be an integral part of it. There should be no axial movement of the tube support body relative to the coupling. The tube support body is preferably shaped as a sleeve with an inner collar that fits into a tube and an outer collar to receive the outer surface of the tube.

It is further preferred that the audible feedback signal is provided by the feedback element being adapted and arranged to audibly break when the tube reaches a fully inserted position relative to the tube support body. This ensures that there is as a predetermined breaking force that can be determined to be small during manufacture of the coupling system. The breaking force that is needed to apply on the tube is independent from varying frictional forces.

Preferably, the feedback element is arranged to be urged out of its initial position by the tube when the tube is inserted onto the tube support body. It is therefore directly the tube itself that the feedback element will give an information about. There is no other moving component that the feedback signal actually refers to. The feedback element can be a separate component or an integral part of the tube support body or of the coupling body.

According to the present invention the feedback element is a member moulded to the tube support body in form of a tongue that protrudes at least partially into the void that is intended to receive the tube. During an insertion of the tube into the void the tongue is urged out of its initial position. Preferably, the tongue shaped member has two attachment sections attaching the tongue shaped member to the tube support body, wherein the first attachment section is adapted and arranged to audibly break when the tube reaches a fully inserted position relative to the tube support body. The second attachment section is preferably adapted and arranged to be maintained during normal use of the coupling. In this way the feedback element is not completely loose and still connected to the tube support body by the second attachment section.

In the following preferred embodiments of the invention are further described in more detail with reference to the figures 1 to 6.
Fig. 1 shows a longitudinal cut-view of a preferred tube coupling system with an insufficiently inserted tube.
Fig. 2 shows a longitudinal cut-view of a first embodiment of the tube coupling system with a fully inserted tube.
Fig. 3 shows a detailed longitudinal cut-view of a tube support body of a first embodiment of the tube coupling system with an insufficiently inserted tube.
Fig. 4 shows a detailed longitudinal cut-view of a tube support body of a first embodiment of the tube coupling system with a fully inserted tube.
Fig. 5 shows a perspective view of a tube support body of a first embodiment of the tube coupling system with an insufficiently inserted tube.
Fig. 6 shows a perspective view of a tube support body of a first embodiment of the tube coupling system with a fully inserted tube.

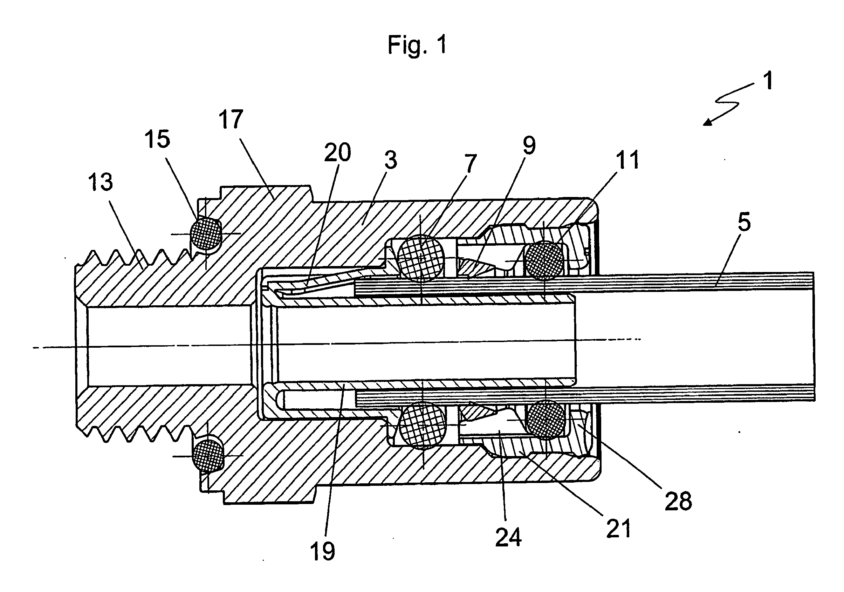

The tube coupling system 1 shown in coupling Fig. 1 comprises a coupling body 3 for receiving a tube 5 of a pressurised fluid system, a leakage sealing means 7 for preventing fluid from the pressurised fluid system to enter the coupling body 3, a gripping means 9 for gripping the outer surface of the tube 5 received in the coupling body 3, and an environment sealing means 11 for preventing intrusion from outside of the coupling body 3. The end of the coupling body 3 that is not intended to receive the tube 5 is provided with a threaded connector end 13 and a seal 15. The coupling body 3 further comprises a section with an outer shape 17 suited to receive a wrench for screwing the tube coupling system 1 with its threaded connector end 13 into another component of the pressurised fluid system.

The tube coupling system 1 further comprises a tube support body 19 which is inserted into the coupling body 3 from the end that is intended to receive the tube 5. The inner shape of the coupling body 3 is adapted to receive the outer collar of the tube support body 19 to securely maintain the tube support body 19 in a radial direction. The tube support body 19 is pushed into the coupling body 3 until a flange section of the tube support body 19 abuts against an inner rim in the coupling body 3 that provides a final stop for the tube support body 19 to be pushed into the coupling body 3. The inner collar of the tube support body 19 is adapted to fit into a tube 5 that is intended to be received by the coupling system 1. The outer collar of the tube support body 19 is adapted to fit onto the outer surface of the tube 5 such that an end portion of the tube 5 is enclosed by the tube support body 19. The tube support body 19 that is fixed in the coupling body 3 therefore provides a guidance for the tube 5 during insertion and a stabilisation of the tube 5 in the coupling body 3 once it is inserted.

The longitudinal cut-view of Fig. 1 is chosen to show also a feedback element 20 as an integral part of the outer collar of the tube support body 19. The feedback element 20 in this embodiment is a member moulded to the tube support body 19 in form of a tongue that protrudes at least partially into the void that is intended to receive the tube 5. The feedback element 20 in form of the tongue shaped member is arranged to be urged out of its initial position by the tube 5 when the tube 5 is reaching a sufficiently inserted position relative to the tube support body 19. The audible feedback signal is provided by the feedback element 20 being adapted and arranged to audibly break when the tube is in a sufficiently inserted position relative to the tube support body. The tongue shaped member has two attachment sections attaching the tongue shaped member to the tube support body. The first attachment section, located at an axially inner portion of the tongue shaped member, is adapted and arranged to audibly break when the tube reaches a sufficiently inserted position relative to the tube support body. The second attachment section, located at an axially outer portion of the tongue shaped member, is adapted and arranged to be maintained during normal use of the coupling in order to prevent the tongue shaped member to become a loose component inside the coupling body 3.

The inner shape of the coupling body 3 provides a cavity section for receiving sealing and gripping means which are inserted into the coupling body 3 after the tube support body 19 has been inserted. By this the tube support body 19 is prevented from a release out of the coupling body 3 by the sealing and securing means.

The sealing and securing means include a leakage sealing means 7 for preventing fluid from the pressurised fluid system to enter the cavity section of the coupling body 3. The leakage sealing means 7 fits in tight connection between the inner surface of the coupling body 3 and the outer surface of an inserted tube 5. The leakage sealing means 7 is preferably an o-ring of rubber material that, before insertion of the tube, partially projects into the void that is intended to receive the tube 5. When the tube 5 is inserted deep enough into the tube coupling system 1 to reach the leakage sealing means 7 the leakage sealing means 7 are slightly deformed radially outward to a tight sealing fit between the tube 5 and the coupling body 3.

Axially further outward in the cavity section of the coupling body 3 the means for securing the tube 5 within the tube coupling system 1 are located. The securing means comprise a gripping means 9, preferably a gripper ring, for gripping the outer surface of the tube 5 received in the tube coupling system 1. Furthermore, the securing means include an insert 21 being preferably formed in an axially inner portion with a plurality of internal protrusions 24 disposed at intervals along an inner circumference of the insert 21, which protrusions 24 form a segmented conical inner portion with a decreasing diameter in the direction towards the axially outer end of the insert 21. The gripping means 9 have a radially outer conical surface which substantially corresponds to the inner segmented conical portion of the insert 21. The securing means is a combination of features from the insert 21 and the gripping means 9. The gripping means 9 are axially movable. The arrangement of the insert 21 and the gripping means 9 is such that an axially outward force applied to the tube 5 held in the tube coupling system 1 will transfer to an increase of a compressive force applied by the gripping means 9 on the outer surface of the tube 5. Any unintentional release force on the tube 5 will therefore trigger the gripping means 9 to react with an increased gripping force on the tube 5 such that the release force does not result in a actual release of the tube 5.

The axially outer portion of the insert 21 is preferably provided with an annular groove to receive an environment sealing means 11, typically an o-ring of rubber material, for preventing intrusion from outside of the coupling body 3. Alternatively, the environment sealing means 11 could be located between an axially outer surface of the internal protrusions 24 of the insert 21 and an axially outer flange 28 of the insert 21. The environment sealing means 11 is not axially secured in the annular groove or space between the protrusions 24 and the flange 28 of the insert 21. Preferably, the groove or space has a larger axial extension than the environment sealing means 11. Alternatively, the groove or space has an axially outer cut-out allowing the environmental sealing means 21 to move axially outward out of sealing position when there is an internal fluid pressure in the coupling body. The normal sealing position of the environment sealing means 11 is the axially most inward position in the groove or space. If an internal fluid pressure in the cavity section of the coupling body 3 builds up due to a leakage of the leakage sealing means 7, the internal fluid pressure urges the environment sealing means 11 at least partially outward out of the inner sealing position. Once the environment sealing means 11 has left at least partially the sealing position, a fluid stream passes the environment sealing means 11 to the outside of the coupling body 3. This audible or visible fluid stream may indicate a leakage from the pressurised fluid system. Preferably, the fluid is air and the air stream to the outside of the coupling body 3 generates an audible fluid stream signal indicating a leakage from the pressurised fluid system.

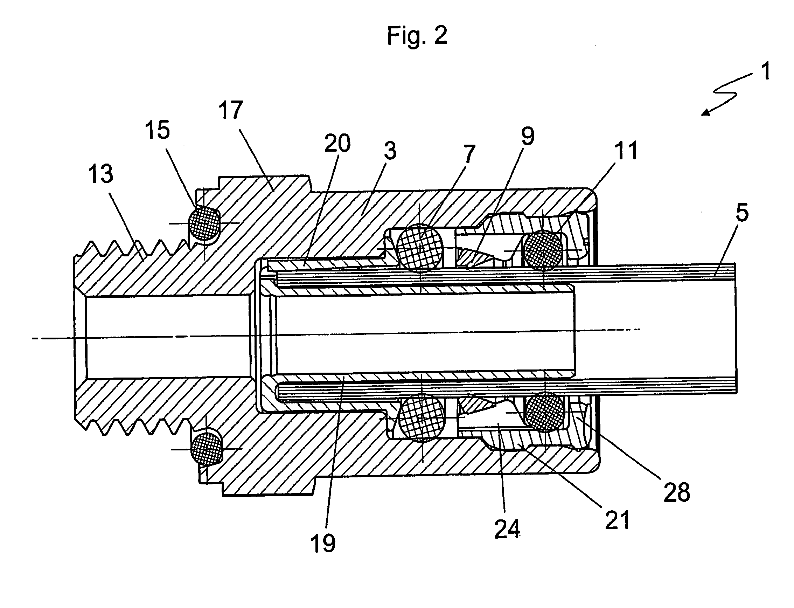

Fig. 2 shows a longitudinal cut-view of a first embodiment of the tube coupling system 1 with a fully inserted tube. In this situation the feedback element 20 has already produced an audible feedback signal in the instance when the tube 5 was fully inserted into the tube coupling system 1. The tongue shaped member has two attachment sections attaching the tongue shaped member to the tube support body 19. The first attachment section, located at an axially inner portion of the tongue shaped member, is broken. The second attachment section, located at an axially outer portion of the tongue shaped member, is maintained.

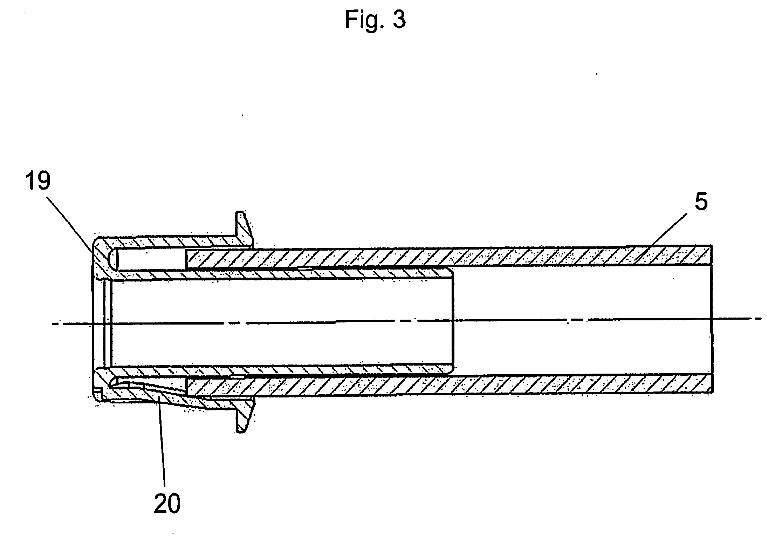

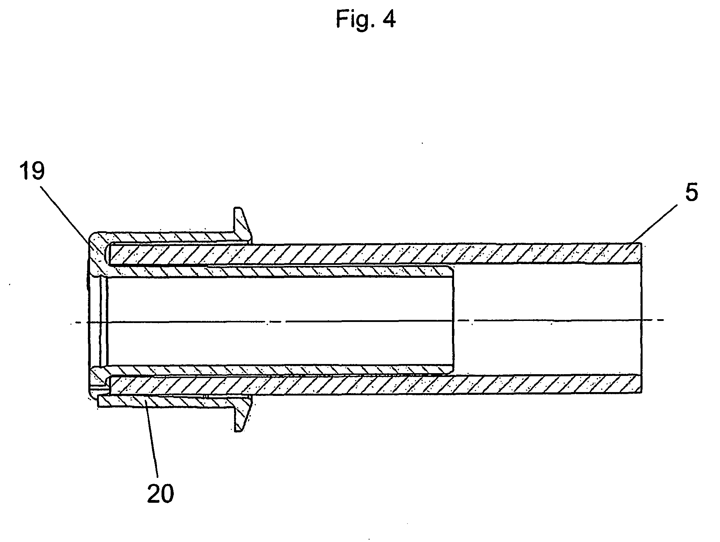

Fig. 3 gives a detailed longitudinal cut-view of the tube support body 19 with an insufficiently inserted tube 5. The design of the feedback element 20 as a one-time usable component of the tube coupling system 3 has the advantage of a cost-effective production. However, the feedback element 20 may also be designed as a resiliently deformable clip member that audibly snaps into a tube receiving position without breaking when the tube 5 is in a sufficiently inserted position relative to the tube support body 19. Such a multiply usable feedback element 20 may be produced of a metal clip, for example. Fig. 4 gives a detailed longitudinal cut-view of the tube support body 19 with a fully inserted tube 5 when the tongue shaped member is already broken at its axially inner first attachment section.

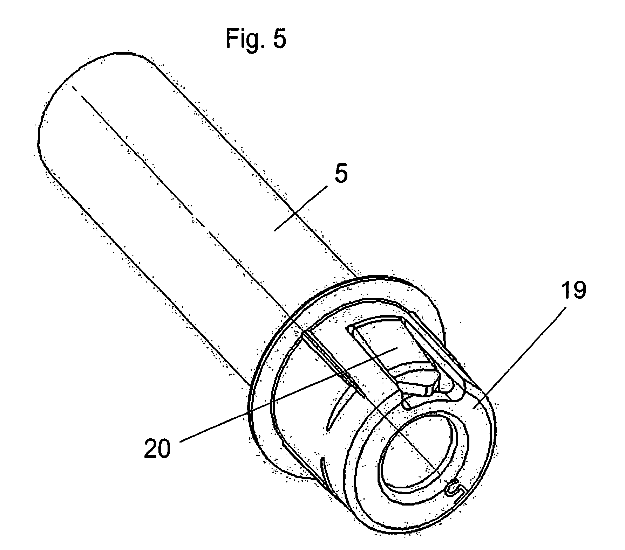

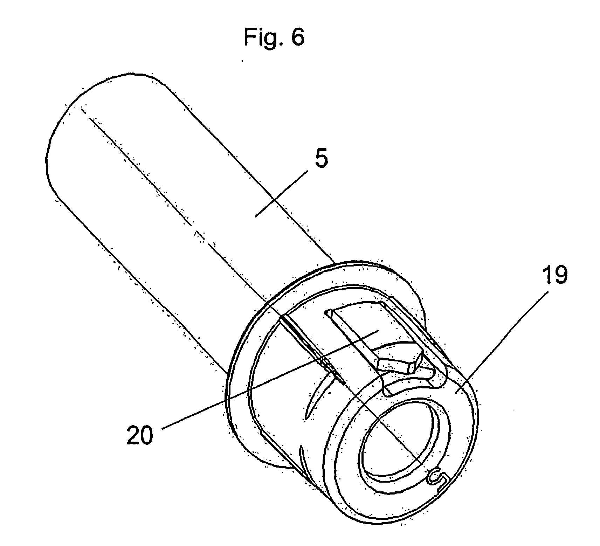

Figs. 5 and 6 give a better impression of the functioning of the feedback element 20 in form of a tongue shaped member that is a moulded integral part of the outer collar of the tube support body 19. In Fig. 5 the tube 5 is not yet sufficiently inserted and the axially inner first attachment section is not yet broken. In Fig. 6 the tube 5 is fully inserted and the axially inner first attachment section is broken, wherein the breaking has produced an audible feedback signal to the user.

## Claims

1. Tube coupling system (1) comprising
- a coupling body (3) for receiving a tube (5),
- a sealing means (7, 11) between the outer surface of the tube (5) and the inner surface of the coupling body (3),
- a gripping means (9) for gripping the outer surface of the tube (5) received in the coupling body (3), and
- a tube support body (19) onto which the tube (5) fits,
**characterised in that**
said tube support body (19) comprises a feedback element (20) that provides an audible feedback signal when the tube (5) is sufficiently inserted onto the tube support body (19), wherein the feedback element (20) is a member moulded to the tube support body (19) in form of a tongue that protrudes at least partially into the void that is intended to receive the tube (5).

2. Tube coupling system according to claim 1, wherein the tube support body (19) is secured within the coupling body (3) .

3. Tube coupling system according to claim 1, wherein the tube support body (19) has the form of a sleeve.

4. Tube coupling system according to claim 1 or 2, wherein the audible feedback signal is provided by the feedback element (20) being adapted and arranged to audibly break when the tube (5) is reaching a sufficiently inserted position relative to the tube support body (19).

5. Tube coupling system according to any one of the preceding claims, wherein the feedback element (20) is arranged to be urged out of its initial position by the tube (5) when the tube (5) is reaching a sufficiently inserted position relative to the tube support body (19).

6. Tube coupling system according to any one of the preceding claims, wherein the feedback element (20) is an integral part of the tube support body (19).

7. Tube coupling system according to claim 1, wherein the tongue shaped member has two attachment sections attaching the tongue shaped member to the tube support body (19), wherein the first attachment section is adapted and arranged to audibly break when the tube (5) reaches a sufficiently inserted position relative to the tube support body (19).

8. Tube coupling system according to claim 1 or 7, wherein the tongue shaped member has two attachment sections attaching the tongue shaped member to the tube support body (19), wherein the second attachment section is adapted and arranged to be maintained during normal use of the tube coupling system (1).

## Patentansprüche

1. Leitungskupplungssystem (1) mit
- einem Kupplungskörper (3) zum Aufnehmen einer Leitung (5),
- Dichtungseinrichtungen (7, 11) zwischen der äußeren Oberfläche der Leitung (5) und der inneren Oberfläche des Kupplungskörpers (3),
- einer Greifeinrichtung (9), um die äußere Oberfläche der in dem Kupplungskörper (3) aufgenommenen Leitung (5) zu greifen, und
- einem Leitungsträgerkörper (19), auf den die Leitung (5) passt,
**dadurch gekennzeichnet, dass**
der Leistungsträgerkörper (19) ein Rückkupplungselement (20) aufweist, das ein hörbares Rückkupplungssignal liefert, wenn die Leitung (5) ausreichend auf den Leitungsträgerkörper (19) eingeführt ist, wobei das Rückkupplungselement (20) ein an den Leitungsträgerkörper (19) angeformtes Teil in Form einer Zunge ist, die wenigstens teilweise in den Freiraum vorsteht, der die Leitung (5) aufnehmen soll.

2. Leitungskopplungssystem nach Anspruch 1, wobei der Leitungsträgerkörper (19) in dem Kupplungskörper (3) befestigt ist.

3. Leitungskupplungssystem nach Anspruch 1, wobei der Leitungsträgerkörper (19) die Form einer Hülse hat.

4. Leitungskupplungssystem nach Anspruch 1 oder 2, wobei das hörbare Rückkupplungssignal durch das Rückkupplungselement (20) geliefert wird, das dazu ausgestaltet und angeordnet ist, hörbar zu brechen, wenn die Leitung (5) eine ausreichend eingeführte Position relativ zu dem Leitungsträgerkörper erreicht.

5. Leitungskupplungssystem nach einem der vorhergehenden Ansprüche, wobei das Rückkupplungselement (20) dazu ausgestaltet ist, von der Leitung (5) aus seiner Anfangsposition herausgedrängt zu werden, wenn die Leitung (5) eine ausreichend eingeführte Position relativ zu dem Leitungsträgerkörper (19) erreicht.

6. Leitungskupplungssystem nach einem der vorhergehenden Ansprüche, wobei das Rückkupplungselement (20) einstückig mit dem Leitungsträgerkörper (19) ist.

7. Leitungskupplungssystem nach Anspruch 1, wobei das zungenförmige Teil zwei Befestigungsabschnitte hat, die das zungenförmige Teil an dem Leitungsträgerkörper (19) befestigen, wobei der erste Befestigungsabschnitt dazu ausgestaltet und angeordnet ist, um hörbar zu brechen, wenn die Leitung (5) eine ausreichend eingeführte Position relativ zu dem Leitungsträgerkörper (19) erreicht.

8. Leitungskupplungssystem nach Anspruch 1 oder 7, wobei das zungenförmige Teil zwei Befestigungsabschnitte hat, die das zungenförmige Teil an dem Leitungsträgerkörper (19) befestigen, wobei der zweite Befestigungsabschnitt dazu ausgestaltet und angeordnet ist, während der normalen Verwendung des Leitungskupplungssystems (1) bestehen zu bleiben.

## Revendications

1. Système de raccord de tuyauterie (1), comprenant :
- un corps de raccord (3) pour recevoir un tube (5),
- des moyens d'étanchéité (7, 11) entre la surface extérieure du tube (5) et la surface intérieure du corps de raccord (3),
- des moyens de saisie (9), pour saisir la surface extérieure du tube (5) logé dans le corps de raccord (3), et
- un corps de support de tube (19), dans lequel le tube (5) se monte,
**caractérisé en ce que**
ledit corps de support de tube (19) comprend un élément à rétroaction (20), fournissant un signal de rétroaction audible lorsque le tube (5) est suffisamment inséré sur le corps de support de tube (19), dans lequel l'élément à rétroaction (20) est un organe, moulé sur le corps de support de tube (19), ayant la forme d'une languette faisant saillie au moins partiellement dans l'espace vide destiné à recevoir le tube (5).

2. Système de raccord de tuyauterie selon la revendication 1, dans lequel le corps de support de tube (19) est fixé à l'intérieur du corps de raccord (3).

3. Système de raccord de tuyauterie selon la revendication 1, dans lequel le corps de support de tube (19) présente la forme d'une douille.

4. Système de raccord de tuyauterie selon la revendication 1 ou 2, dans lequel le signal de rétroaction audible est fourni par l'élément à rétroaction (20), adapté et agencé pour se rompre de manière audible lorsque le tube (5) est suffisamment inséré en une position relative par rapport au corps de support de tube (19).

5. Système de raccord de tuyauterie selon l'une quelconque des revendications précédentes, dans lequel l'élément à rétroaction (20) est adapté et agencé pour être expulsé de sa position initiale par le tube (5), lorsque le tube (5) atteint une position suffisamment insérée par rapport au corps de support de tube (19).

6. Système de raccord de tuyauterie selon l'une quelconque des revendications précédentes, dans lequel l'élément à rétroaction (20) est partie intégrante du corps de support de tube (19).

7. Système de raccord de tuyauterie selon la revendication 1, dans lequel l'organe conformé en languette comprend deux sections d'attachement, attachant l'organe conformé en languette au corps de support de tube (19), dans lequel la première section d'attachement est adaptée et agencée pour se rompre de manière audible lorsque le tube (5) atteint une position suffisamment insérée par rapport au corps de support de tube (19).

8. Système de raccord de tuyauterie selon la revendication 1 ou 7, dans lequel l'organe conformé en languette comprend deux sections d'attachement, attachant l'organe conformé en languette au corps de support de tube (19), dans lequel la deuxième section d'attachement est adaptée et agencée pour être maintenue durant l'utilisation normale du système de raccord de tuyauterie (1).
